# EUROPEAN PATENT APPLICATION

(11) **EP 4 847 232 A1**
(43) Date of publication of application: **02.12.2026**
(21) Application number: 26181423.0
(22) Date of filing: 27.05.2026
(51) Int. Cl.: B29C 53/62, B29C 53/58, B29C 53/80, F01D 11/00, F16J 9/26, F16J 9/28, F16J 15/06, F16J 15/18, F16J 15/30, B29K 307/04, B29L 31/26, F16J 15/02

(54) **GAS TURBINE ENGINE WITH SPLIT HELICAL PISTON SEAL**

(30) Priority: 27.05.2025 US 202519219344
(71) Applicant: RTX Corporation, Farmington, CT 06032 (US)
(72) Inventor: KLING, Colin J., Farmington, 06032 (US); LYDERS, David R., Farmington, 06032 (US)
(74) Representative: Dehns

(57) **Abstract**

A method of manufacturing a split seal (74) includes winding a fibre (76a) around a cylindrical mandrel (80) to provide a hollow cylinder wound fibre form. The winding is conducted with a predetermined pitch with respect to an axis of rotation of the cylindrical mandrel, followed by consolidating the hollow cylinder wound fibre form with a matrix (76b) to provide a hollow cylinder composite form, followed by machining the hollow cylinder composite form to provide a split ring helical band (74) that includes first and second end sections (74a, 74b) that are mateable. The fibre (76a) is continuous around the split ring helical band (74) from the first end section (74a) to the second end section (74b).

Preferably, the split seal (74) is used in a gas turbine engine (20), located between the shaft (70) and a rotor (62) mounted thereon.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

A speed reduction device, such as an epicyclical gear assembly, may be utilized to drive the fan section such that the fan section may rotate at a speed different than the turbine section. In such engine architectures, a shaft driven by one of the turbine sections provides an input to the epicyclical gear assembly that drives the fan section at a reduced speed.

### SUMMARY

According to one aspect of the present invention, there is provided a method that includes winding a fiber around a cylindrical mandrel to provide a hollow cylinder wound fiber form. The winding is conducted with a predetermined pitch with respect to an axis of rotation of the cylindrical mandrel, followed by consolidating the hollow cylinder wound fiber form with a matrix to provide a hollow cylinder composite form, followed by machining the hollow cylinder composite form to provide a split ring helical band that includes first and second end sections that are mateable. The fiber is continuous around the split ring helical band from the first end section to the second end section.

Optionally, and in accordance with the above, in a state of rest, the first and second end sections are axially offset from each other by an axial offset, the first and second end sections including, respectively, first and second axial mate faces, wherein in the state of rest the first and second axial mate faces face away from each other in axially opposite directions, and the split ring helical band is flexible such that the first and second axial mate faces are moveable from the state of rest axially past each other to a mated state in which the first and second axial mate faces face toward each other and are in contact with each other.

Optionally, and in accordance with any of the above, the axial offset is equal to the predetermined pitch.

Optionally, and in accordance with any of the above, the fiber is carbon fiber and the matrix is carbon graphite, and the carbon fiber is, by volume, 35% to 65% of the hollow cylinder composite.

According to another aspect of the present invention, there is provided a seal that includes a split ring helical band including first and second end sections that are mateable. When the split ring helical band is in a state of rest, the first and second end sections are axially offset from each other. The split ring helical band is made of a composite comprised of carbon fiber disposed in a carbon matrix. The carbon fiber is continuous around the split ring helical band from the first end section to the second end section.

Optionally, and in accordance with the above, the first and second end sections include, respectively, first and second axial mate faces, and in the state of rest the first and second axial mate faces face away from each other.

Optionally, and in accordance with any of the above, from the state of rest, the first and second end sections are axially moveable to a mated state in which the first and second end sections contact each other.

Optionally, and in accordance with any of the above, in the mated state the first and second axial faces face toward each other and are in contact.

Optionally, and in accordance with any of the above, the carbon fiber is, by volume, 35% to 65% of the composite
The present invention may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates a seal between a rotor and a shaft.
Figure 3 illustrates an isolated view of a seal.
Figure 4 depicts installation of the seal.
Figure 5A depicts a method of making a seal.
Figure 5B depicts a method of making a seal.

In this invention, like reference numerals designate like elements where appropriate and reference numerals with the addition of one-hundred or multiples thereof designate modified elements that are understood to incorporate the same features and benefits of the corresponding elements.

### DETAILED DESCRIPTION

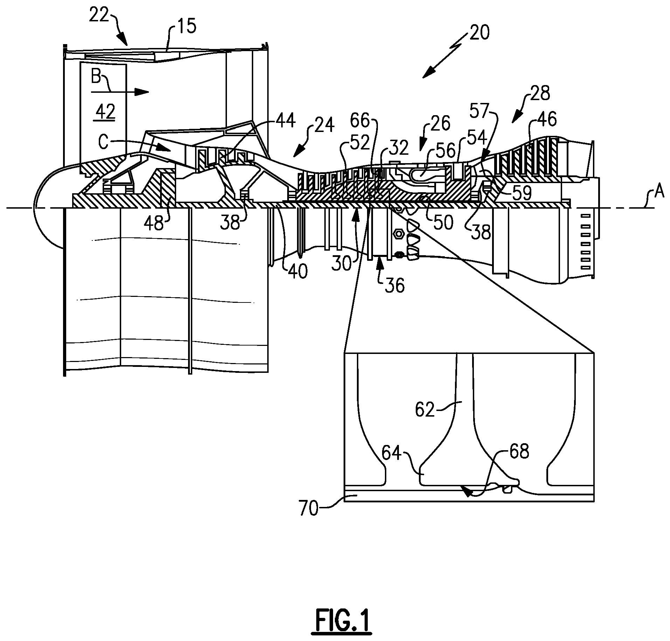

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm (0.45 kg) of fuel being burned divided by lbf (4.5 N) of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150.0 ft / second (350.5 meters/second), and can be greater than or equal to 1000.0 ft / second (304.8 meters/second).

The high pressure compressor 52 includes a rotor 62 that has a portion 64 (shown in Fig. 1 inset). In this example, the rotor 62 carries rotor blades 66, which may be integral with the rotor 62 or mechanically attached to the rotor 62. It is to be understood, however, that in other examples the rotor 62 may not have blades. The portion 64 defines a seal surface 68. In this example, the seal surface 68 is in a central bore of the rotor 62, but it could alternatively be on a flange or arm that extends from the rotor 62. A shaft 70 extends through the bore. The shaft 70 may be part of the high speed spool 32. The rotor 62 and the shaft 70 are rotatable in the same direction about the engine central axis A.

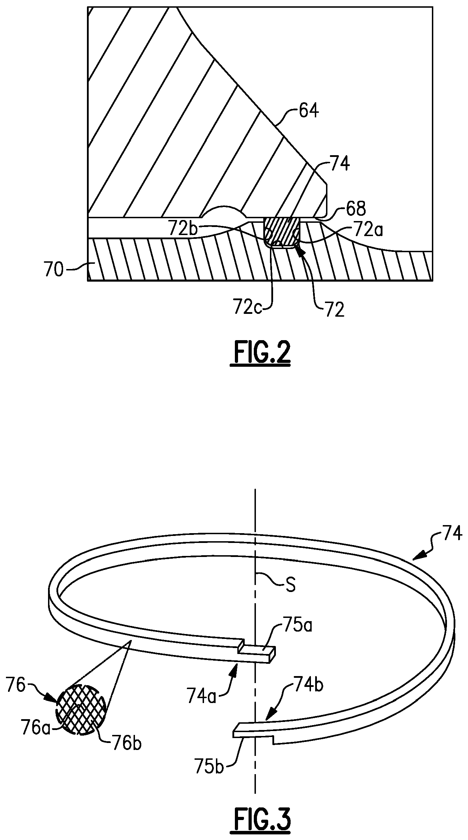

Figure 2 illustrates a sectioned view taken in a plane that includes the axis A. The shaft 70 defines an annular seal channel 72. The channel 72 has fore and aft channel sides 72a/72b, a channel floor 72c, and a top that opens to the seal surface 68. There is a split seal 74 disposed in the channel 72 for sealing against the seal surface 68. The seal 74 may also be considered to be a piston seal. When the engine 20 is running, there is a pressure differential between the upstream and downstream regions of the rotor 62. The seal 74 facilitates isolating those pressure regions from each other.

Figure 3 shows an isolated view of the seal 74 in a state of rest. The state of rest refers to the shape that the seal 74 is in with no forces applied. The seal 74 includes first and second end sections 74a/74b that are mateable to form a joint. In the state of rest, the seal 74 has a helical shape (i.e. a helical band) such that the end sections 74a/74b are axially offset from each other with respect to seal axis S (which is co-linear with central engine axis A when the seal 74 is installed in the engine 20). The sections 74a/74b includes respective axial mate faces 75a/75b that face away from each other in the state of rest.

The seal 74 may be made of a composite 76 (inset Figure 3). In this example, the composite 76 includes carbon fibers 76a disposed in a carbon matrix 76b. For example, the fibers 76a and the matrix 76b are substantially pure graphite, and the carbon fibers 76a are, by volume, 35% to 65% of the composite 76. The remainder of the volume of the composite 76 is made up by the matrix 76b and porosity. Optionally, the composite 76 may include an oxidation inhibitor wash, such as mono-aluminum-phosphate, to facilitate oxidation resistance of the graphite. Alternatively, the seal 74 may be formed of an organic matrix composite (e.g., a thermoplastic or thermoset) or a metallic alloy.

The helical shape of the seal 74 may facilitate fabrication. For example, electrical discharge machining (EDM) can be used to fabricate the geometry of the ends of a split ring that is made of a metallic alloy. For other materials, such as the C/C composite 76, are not processable via (EDM). As a result, despite desirable properties of C/C composite material for split seals, heretofore it has been challenging to employ this material because the desired geometry of the end sections could not be easily produced. The helical shape of the seal 74 permits the end sections 74/74b to be axially offset from each other. Because they are offset, each end section 74a/74b can be machined without obstruction by the other to form the desired mating geometry. For example, the seal 74 is initially formed in the helical shape but with unfinished end sections. The end sections can then be machined to form the axial mate faces 75a/75b, or other mating geometry. In this regard, the helical shape enables the use of the C/C composite 76, although as indicated above other materials may also benefit.

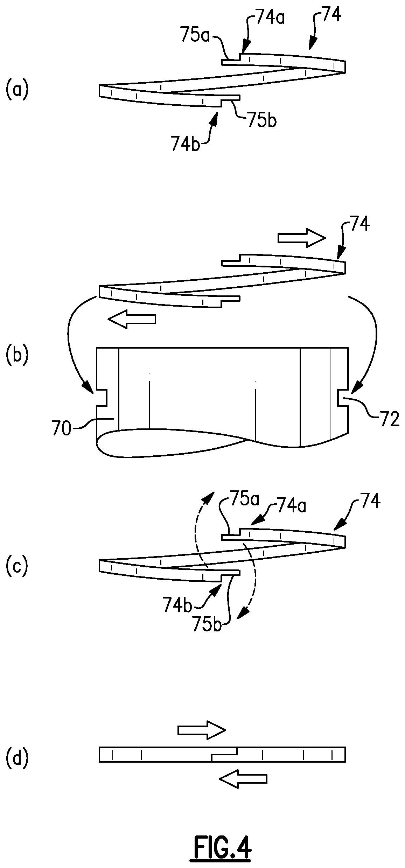

Figure 4 depicts a method of installation of the seal 74 into the channel 72, which may also be conducted in reverse to remove the seal 74 from the channel 72, such as for maintenance or replacement. The seal 74 is provided at (a) in the state of rest, in which the end sections 74a/74b are axially offset from each other. At (b), the seal 74 is diametrically expanded to fit over the shaft 70 and into the channel 72. In that regard, although the composite 76 is somewhat stiff, the radial height and axial width of the seal 74 are thin and allow the seal 74 to flex when the end sections 74a/74b are pulled apart. For instance, the seal 74 is up to 0.5 inches in radial height and 0.5 inches in axial width. The deformation of the seal 74 is within the elastic regime and the seal 74 thus tends to spring back toward the state of rest when no forces are applied. As shown at (c), with the end sections 74a/74b pulled far enough apart to axially clear each other, the end sections 74a/74b are moved axially past one another. The seal 74 is then diametrically compressed such that the seal 74 seats into the floor 72c of the channel 72 and the end sections 74a/74b come into axial alignment. The ends sections 74a/74b are then moved axially toward each other so that the axial mate faces 75a/75b come into contact.

The seated position on the floor 72c of the channel 72 provides clearance for the shaft 70 to be received into the bore of the rotor 62 during installation without the seal 74 "catching" on the side of the rotor 62. Optionally, an adhesive may be applied between the seal 74 and the channel floor 72c to affix the seal 74 in the channel. The adhesive may be a polymeric material that degrades when exposed to engine operational temperatures. During engine operation, the seal 74 diametrically expands under centrifugal forces to contact the seal surface 68 for sealing when the shaft 70 rotates.

It is desirable to reduce wear on a rotor, as rotors are typically large, expensive components that cannot be easily repaired or replaced. Sealing between a shaft and a rotor, however, is particularly challenging in that regard. Even though the seal and the rotor are rotating in the same direction with no or substantially no relative rotational movement there between, the seal can shift through various engine cycles, potentially wearing the rotor. The disclosed seal 74 is made of the C/C composite 76 and is low in weight/density. In comparison to a denser metallic seals, the seal 74 thus produces lower centrifugal forces against the rotor 62, thereby facilitating reductions in wear. Additionally, the seal 74 is highly lubricious in comparison to metallic seals, which may further facilitate wear reduction.

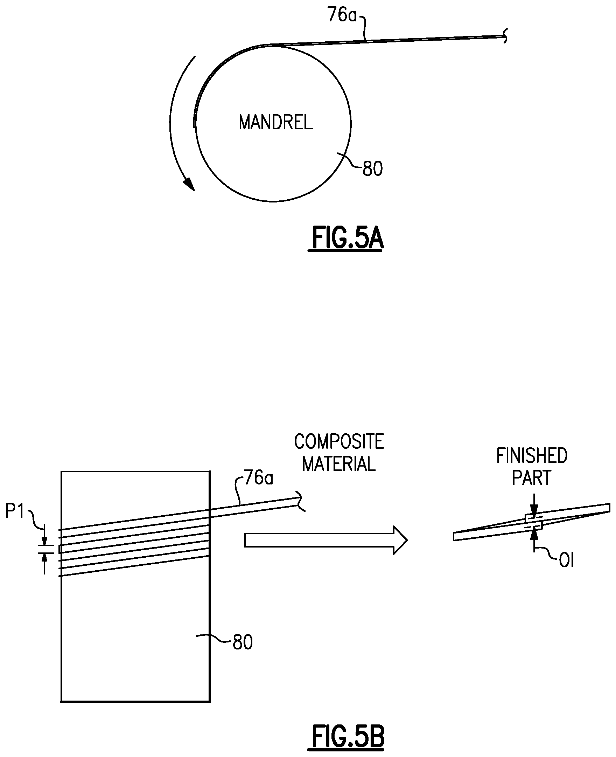

Figures 5A and 5B depict a method of manufacturing the seal 74 as a one-piece seal with continuous carbon fibers 76a. In general, the seal 74 is made by winding the carbon fiber 76a around a cylindrical mandrel 80. The wound carbon fiber 76a is then infiltrated with the matrix 76b, followed by machining the helical seal (band) 74 from the resulting composite cylinder. Multiple seals 74 can be made from each cylinder.

The seal 74 is manufactured to have continuous carbon fiber 76a from end section 74a to end section 74b. In contrast, if the carbon fiber 76a were to be wound with a zero-pitch, i.e., with the plane of each winding being approximately perpendicular to the rotational axis of the mandrel 80, then when the helical shape of the seal 74 is machined from the cylinder, the machining would cut across the fibers such that the finished seal would contain portions of several discontinuous windings. Instead, as shown in the depicted example, the carbon fiber 76a is wrapped with a controlled pitch P1, which is a set axial distance along the mandrel 80 for each revolution of the mandrel 80 during the winding (quantitatively represented as a number of windings per inch of axial length). The pitch P1 is selected to match the axial offset O1 of the end sections 74a/74b. Thus, when the helical shape of the seal 74 is cut from the cylinder, the seal 74 contains a continuous winding of the carbon fiber 76a. If the pitch P1 does not match the axial offset O1, the finished seal would contain portions of several windings and not have continuous fiber. The continuous fiber facilitates higher strength in comparison to discontinuous fiber. Once cut from the cylinder, the end sections 74a/74b are machined to form the axial mate faces 75a/75b.

This method of manufacture can also be scaled for mass production by wrapping the mandrel 80 over a predetermined length such that multiple seals 74 can be machined from each cylinder, each with continuous fibers 76a.

The continuous fibers 76a provide greater flexibility and durability. Moreover, the pitch P1 from the manufacturing process preloads the axial mate faces 75a/75b to press together as they try to move back to their initial, at-rest position. The preload also prevents a gap or separation of the axial mate faces 75a/75b, which facilitates minimizing leakage.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A method of making a split seal (74), comprising:
winding a fiber (76a) around a cylindrical mandrel (80) to provide a hollow cylinder wound fiber form, wherein the winding is conducted with a predetermined pitch (P1) with respect to an axis of rotation of the cylindrical mandrel (80);
consolidating the hollow cylinder wound fiber form with a matrix (76b) to provide a hollow cylinder composite form (76); and
machining the hollow cylinder composite form (76) to provide a split ring helical band (74) that includes first and second end sections (74a, 74b) that are mateable, the fiber (76a) being continuous around the split ring helical band from the first end section (74a) to the second end section (74b).

2. The method of claim 1, wherein, in a state of rest, the first and second end sections (74a, 74b) are axially offset from each other by an axial offset (O1), the first and second end sections (74a, 74b) including, respectively, first and second axial mate faces (75a, 75b), and in the state of rest, the first and second axial mate faces (75a, 75b) face away from each other in axially opposite directions, and the split ring helical band (74) is flexible such that the first and second axial mate faces (75a, 75b) are moveable from the state of rest axially past each other to a mated state in which the first and second axial mate faces (75a, 75b) face toward each other and are in contact with each other.

3. The method of claim 2, wherein the axial offset (O1) is equal to the predetermined pitch (P1).

4. The method of any preceding claim, wherein the fiber (76a) is carbon fiber and the matrix (76b) is carbon graphite, and the carbon fiber is, by volume, 35% to 65% of the hollow cylinder composite (76).

5. A seal (74) for a gas turbine engine (20), comprising:
a split ring helical band (74) including first and second end sections (74a, 74b) that are mateable, wherein when the split ring helical band (74) is in a state of rest, the first and second end sections (74a, 74b) are axially offset from each other, the split ring helical band (74) is made of a composite (76) comprised of carbon fiber (76a) disposed in a carbon matrix (76b), and the carbon fiber (76a) is continuous around the split ring helical band (74) from the first end section (74a) to the second end section (74b).

6. The seal (74) of claim 5, wherein the first and second end sections (74a, 74b) include, respectively, first and second axial mate faces (75a, 75b), and in the state of rest the first and second axial mate faces (75a, 75b) face away from each other.

7. The seal (74) of claim 6, wherein from the state of rest, the first and second end sections (74a, 74b) are axially moveable to a mated state in which the first and second end sections (74a, 74b) contact each other.

8. The seal (74) of claim 7, wherein in the mated state the first and second axial faces (75a, 75b) face toward each other and are in contact.

9. The seal of any of claims 5 to 8, wherein the carbon fiber (76a) is, by volume, 35% to 65% of the composite (76).
